# EUROPEAN PATENT SPECIFICATION

(11) **EP 1 698 139 B1**
(45) Date of publication and mention of the grant of the patent: **07.11.2007**
(21) Application number: 04773055.1
(22) Date of filing: 07.09.2004
(51) Int. Cl.: H04L 29/06, H04L 12/58, H04N 7/16

(54) **DATA RECEPTION TERMINAL AND MAIL CREATION METHOD**
DATENEMPFANGSENDGERÄT UND POSTENSTELLUNGSVERFAHREN
TERMINAL DE RECEPTION DE DONNEES ET PROCEDE DE CREATION DE COURRIER

(30) Priority: 27.10.2003 JP 2003365485
(43) Date of publication of application: 06.09.2006
(73) Proprietor: MATSUSHITA ELECTRIC INDUSTRIAL CO., LTD, Kadoma-shi, Osaka 571-8501 (JP)
(72) Inventor: HASEGAWA, Tomoko, Hiroshima-shi, Hiroshima 731-0103 (JP); UEDA, Eiji, Toyota-gun, Hiroshima 729-2516 (JP)
(74) Representative: Gassner, Wolfgang
(86) International application number: PCT/JP2004/013382
(87) International publication number: WO 2005/041529

(56) References cited:
- US-B1- 6 564 383

## Description

### TECHNICAL FIELD

The present invention relates to a data reception terminal and a mail creation method, and more particularly to a data reception terminal that creates, by utilizing information associated with multimedia data (e.g., images, sounds, and the like) which is received via broadcast, communication, or the like, an electronic mail relating to the multimedia data and a mail creation method to be performed in the data reception terminal.

### BACKGROUND ART

In recent years, TV program broadcast has been experiencing a rapid conversion from analog to digital form. The digital broadcast has been putting various services, which had been difficult for the analog broadcast to provide, to practical use. One example is data broadcasting services. According to a data broadcasting service, a user who is viewing a TV program is capable of easily obtaining information such as weather forecast, a homepage URL of the TV program that is being viewed, and the like, via broadcast. As a description format for data which is used in the data broadcasting service, BML (Broadcast Markup Language) is generally known.

Meanwhile, the sophistication of functionality of mobile phones has been progressing rapidly. Conventionally, a main service provided by mobile phones has been voice communication, but at present, homepage browsing and electronic mail are indispensable. In particular, electronic mail has been replacing voice communication as a main service.

With the situation as described above, in recent years, as mobile phones are beginning to have a digital broadcast receiving function, a compound service combining a digital broadcast receiving function and a mail communication function is proposed. The "compound service" refers to, for example, a service in which, if a user specifies a scene while viewing a TV program, an electronic mail containing attached information relating to the specified scene (scene-related information) is transmitted to a designated destination. Here, a "scene" refers to a part of a TV program, and means broadcast data which is uniquely specified by time, a channel that identifies the program, and/or the like.

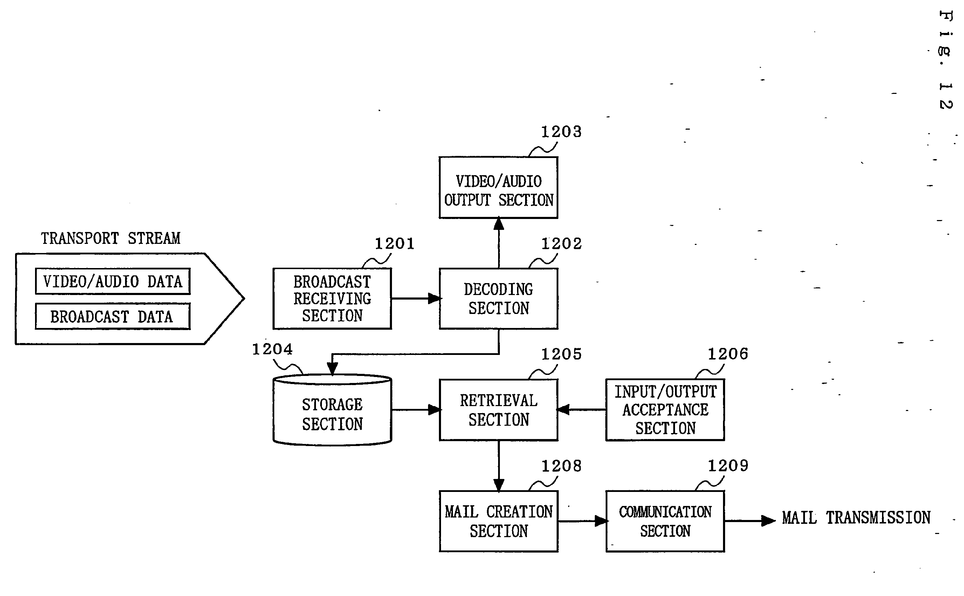

An exemplary structure of a conventional mobile phone which realizes such a compound service is shown in FIG. 12. As shown in FIG. 12, the conventional mobile phone includes a broadcast receiving section 1201, a decoding section 1202, an video/audio output section 1203, a related information storage section 1204, a related information retrieval section 1205, an input/output acceptance section 1206, a mail creation section 1208, and a mail communication section 1209. The broadcast receiving section 1201 receives multiplexed data of a TV program which is broadcast from a TV station. The decoding section 1202 separates the received multiplexed data into video/audio data and broadcast data. The video/audio output section 1203 outputs video and audio. The related information storage section 1204 stores and manages the broadcast data. The input/output acceptance section 1206 detects a user's specifying of a scene, and generates predetermined scene specification information. The related information retrieval section 1205 retrieves corresponding scene-related information based on the scene specification information. The mail creation section 1208 creates an electronic mail to which is attached the retrieved scene-related information. The mail communication section 1209 transmits the created electronic mail.

In the conventional technology above, however, although it is possible to automatically attach, as scene-related information, information such as the URL of a homepage of a TV program or the like to an electronic mail, a user has to input and create by operating keys as often as necessary a content the user desires to convey to the other party as the body of the electronic mail. As a result, there occurs a problem in that it takes a long time from when a scene is specified until an electronic mail is transmitted. Consequently, in the case of a TV program in which scenes change from moment to moment, it is conceivable that a scene irrelevant to the content of an electronic mail is being broadcast at the moment that the transmission of the electronic mail is completed. This problem also applies to the case where the multimedia data is music which is broadcast from a radio station.

Patent publication US 6564383, discloses a system which stores received multimedia data according to criteria specified by a user. A user can later view the stored multimedia data using a browser. A link to the stored data can be also e-mailed to other users.

Therefore, an object of the present invention is to provide a data reception terminal and a mail creation method which, in the case where information related to multimedia data is to be transmitted via electronic mail, makes it possible to perform the creation of an electronic mail easily and accurately, by providing assistance in user input operation when creating the body of the electronic mail.

### DISCLOSURE OF THE INVENTION

The present invention is directed to a data reception terminal according to claim 1, for receiving multiplexed data obtained by multiplexing multimedia data including at least video or audio and scene-related information related to the multimedia data, and creating an electronic mail by utilizing the multiplexed data. To achieve the object above, a data reception terminal according to the present invention comprises a receiving section, a decoding section, an output section, a storage section, an input/output acceptance section, a retrieval section, a format conversion section, and a mail creation section.

The receiving section receives the multiplexed data. The decoding section separates the received multiplexed data into the multimedia data and the scene-related information. The input/output acceptance section generates, in response to a request from a user, scene specification information for identifying a portion of the multimedia data that is being outputted from the output section, the scene specification information including identification information and time. The retrieval section retrieves, from the storage section, scene-related information corresponding to the scene specification information. The format conversion section converts the retrieved scene-related information into a format which enables the scene-related information to be used in the electronic mail. The mail creation section creates a part of data of the electronic mail by utilizing the converted scene-related information.

Here, preferable methods for creating an electronic mail employed by the mail creation section are, for example: creating a body section of the data of the electronic mail from the scene-related information; setting, as a subject of the electronic mail, a part of the scene-related information corresponding to a title; and displaying, in the electronic mail, data of the electronic mail created from the scene-related information in a form different from that of any other information contained in the electronic mail. It is desirable that data of the electronic mail created from the scene-related information be protected so that a content of the scene-related information is not allowed to be changed.

The processes performed by the afore-mentioned components of the data reception terminal can be regarded as a mail creation method defining a sequence of processing steps. This method is provided in the form of a program for causing a computer to execute the series of processes. This program may be introduced into the computer via a computer-readable recording medium having the program recorded therein. In addition, all or some of the functional blocks that constitute the afore-described data reception terminal may be realized as an LSI, which is an integrated circuit.

As described above, according to the present invention, text data (i.e., scene-related information) for an electronic mail is extracted from information associated with a specified scene. Consequently, it becomes possible to create the electronic mail in a short time and with ease. In particular, the body of an electronic mail can be created by only inputting words to be added between text data. Moreover, the operation of inputting the subj ect of an electronic mail by a user can be omitted. Furthermore, it is possible to visually distinguish between scene-related information and a part inputted by a user within the body of an electronic mail.

The invention is also directed to a corresponding method according to claim 6, a computer-readable program according to claim 7, a medium having therein recorded a computer-readable program according to claim 8 and an Integrated Circuit according to claim 9. Further embodiments of the invention are set out in the dependent claims.

### BRIEF DESCRIPTION OF THE DRAWINGS

FIG. 1 is a diagram illustrating an outline of a communication system to which a data reception terminal of the present invention is applied.
FIG. 2 is an external view of an exemplary data reception terminal according to an embodiment of the present invention.
FIG. 3 is a diagram illustrating a typical hardware configuration for realizing a data reception terminal.
FIG. 4 is a diagram illustrating a software configuration of a data reception terminal which employs a mail creation method according to an embodiment of the present invention.
FIG. 5 is a flowchart of the processes concerning a broadcast receiving function of a data reception terminal.
FIG. 6 is a flowchart of the processes concerning an electronic mail transmission function of a data reception terminal.
FIG. 7 is a diagram illustrating a specific example of broadcast data which is associated with multimedia data.
FIG. 8A and FIG. 8B are diagrams illustrating specific examples of scene specification information.
FIG. 9A and FIG. 9B are diagrams illustrating an example where a plurality of services are provided by one channel.
FIG. 10 is a diagram illustrating an exemplary display screen in which scene-related information is put in an electronic mail.
FIG. 11 is a diagram illustrating an exemplary display screen after the body of the electronic mail shown in FIG. 10 has been edited.
FIG. 12 is a diagram illustrating a software configuration of a conventional mobile phone.

### BEST MODE FOR CARRYING OUT THE INVENTION

An embodiment of the present invention is described below with reference to the accompanying drawings.

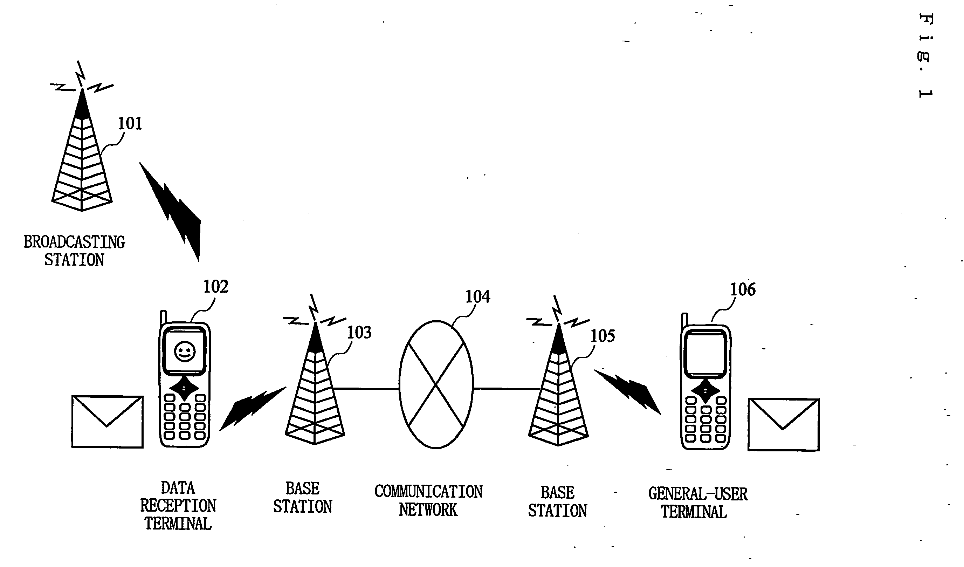

Firstly, there is described an outline of a communication system in which a multimedia digital distribution service and an electronic mail service are combined, and to which a data reception terminal of the present invention is applied. FIG. 1 illustrates an example where a TV program composed of multimedia data including video, audio, and various data is distributed from a broadcasting station 101 to a data reception terminal 102 via digital broadcast. From the broadcasting station 101, multiplexed data obtained by multiplexing multimedia data and accompanying data (which, in this example, is data for use in data broadcast) related to the multimedia data is broadcast. The present invention can be applied to any system in which multimedia data and accompanying data are inputted synchronously. Therefore, multimedia data may be data for a radio program using only sounds, instead of data for a TV program, and the distribution form of multimedia data is not restricted to broadcast but may be communication.

As shown in FIG. 1, a communication system of the present invention includes a broadcasting station 101, a data reception terminal 102, a base station 103, a communication network 104, a base station 105, and a general-user terminal 106. The broadcasting station 101 and the data reception terminal 102 have a function relating to broadcast, and the data reception terminal 102 and the general-user terminal 106 have a function relating to electronic mail. The base station 103, the base station 105, and the communication network 104 relay an electronic mail which is exchanged between the data reception terminal 102 and the general-user terminal 106.

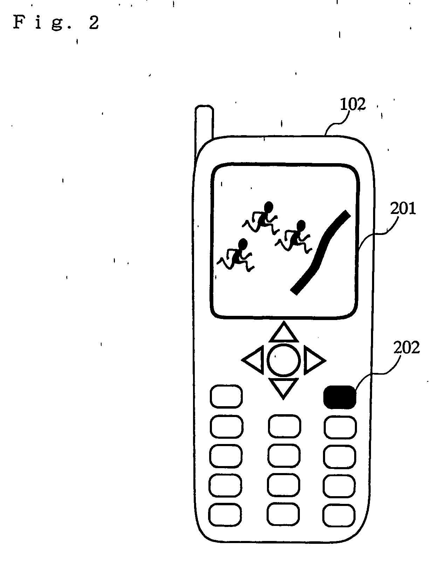

The data reception terminal 102, which is a characteristic feature of the present invention, is a terminal that has both a broadcast function which enables the reception of broadcast data and a communication function which enables the transmission and reception of an electronic mail, and is typically a mobile phone as illustrated in FIG. 2. If a user of the data reception terminal 102 who is viewing a TV program (which is being displayed on a display screen 201) finds himself or herself seeing an interesting scene which he or she desires to convey to another user, a scene specifying button 202 is pressed. This operation enables the acquisition of a point in time at which the scene specifying button 202 has been pressed, information for identifying the TV program that has been viewed at the time, and information related to the TV program. This acquisition process will be described in detail later.

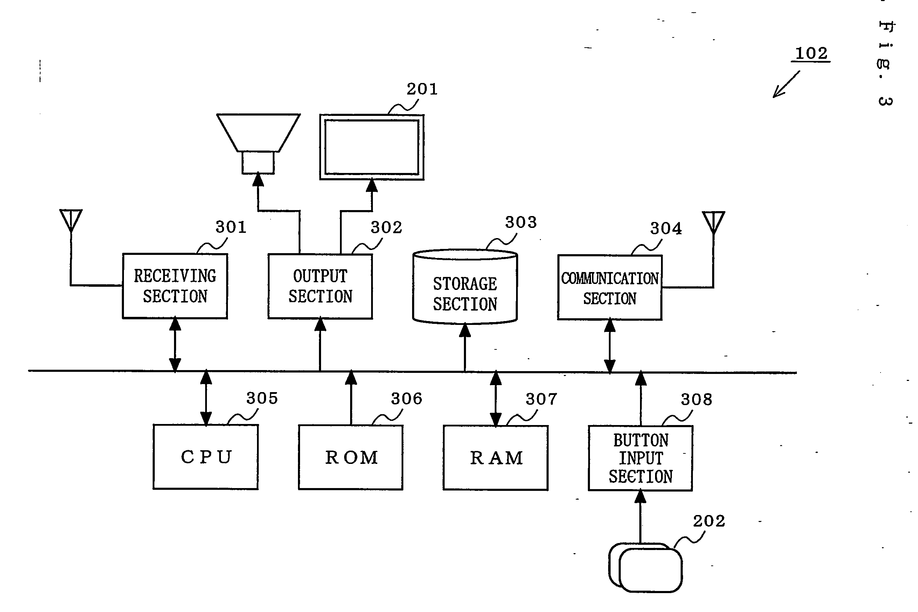

FIG. 3 is a diagram illustrating a typical hardware configuration for realizing a data reception terminal 102 of the present invention. As shown in FIG. 3, the data reception terminal 102 includes a receiving section 301 for receiving a broadcast wave via an antenna, an output section 302 which is connected to a loudspeaker and/or the display screen 201, a storage section 303 for storing decoded broadcast data, a communication section 304 for performing the transmission and reception of an electronic mail via the antenna or the like, a CPU 305 that takes charge of the overall control of the terminal, a ROM 306 for storing a program, a RAM 307 that is utilized for the execution of the program, a button input section 308 that includes the scene specifying button 202, and so on. All of these components are connected with one another.

In the ROM 306, a software program for implementing the system is stored. The CPU 305 executes the program stored in the ROM 306, and performs a writing or updating of occurring data onto the RAM 307. In addition, as a result of executing the program, the CPU 305 receives at the receiving section 301 a broadcast wave which is distributed from the broadcasting station 101, and outputs, via the output section 302, audio and video to the loudspeaker and the display screen 201, respectively. Further, the CPU 305 accepts a key input by the user via the scene specifying button 202 which is connected to the button input section 308. Furthermore, the CPU 305 performs a transmission or reception of an electronic mail via the antenna which is connected to the communication section 304.

In the above, the data reception terminal 102 of the present invention has been described in terms of hardware configuration. Next, a characteristic mail creation method that the data reception terminal 102 of the present invention employs by utilizing at least some of those hardware components is described in terms of software configuration.

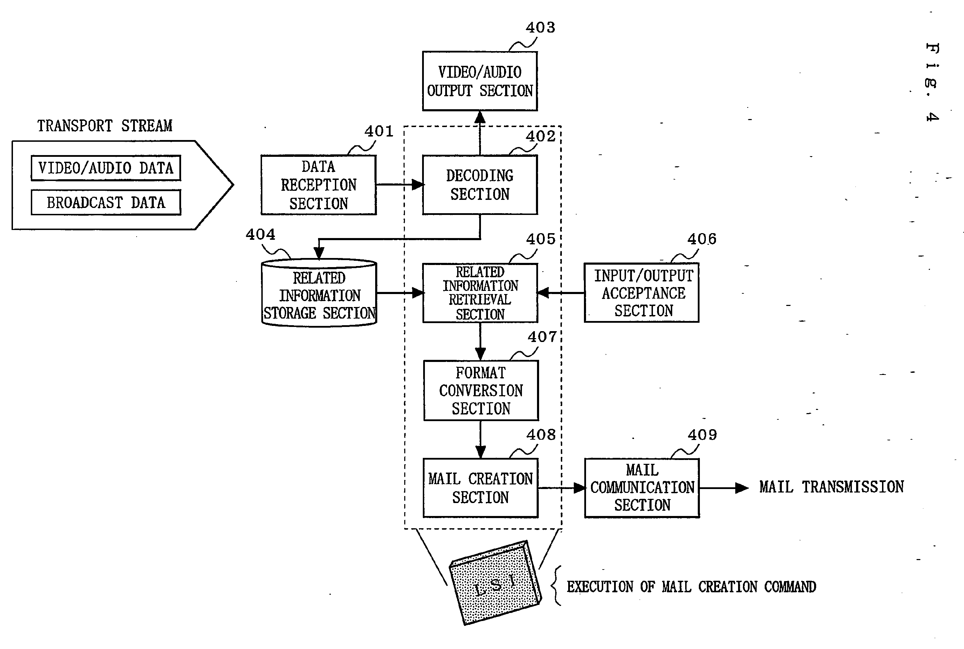

FIG. 4 is a diagram illustrating a software configuration of a data reception terminal 102 which employs the mail creation method according to an embodiment of the present invention. By being read by the CPU 305, the program stored in the ROM 306 as shown in FIG. 3 realizes the functions as a data reception section 401, a decoding section 402, an video/audio output section 403, a related information storage section 404, a related information retrieval section 405, an input/output'acceptance section 406, a format conversion section 407, a mail creation section 408, and a mail communication section 409.

The data reception section 401 receives multiplexed data of a TV program which is broadcast from the broadcasting station 101. The decoding section 402 separates the received multiplexed data into video/audio data and accompanying data that contains scene-related information, which is information related to a scene of a TV program. The video/audio output section 403 outputs video and audio. The related information storage section 404 stores and manages the accompanying data. The input/output acceptance section 406 detects a user' s specifying of a scene, and generates predetermined scene specification information. The related information retrieval section 405 retrieves corresponding scene-related information based on the scene specification information. The format conversion section 407 converts the retrieved scene-related information into a format which enables the retrieved scene-related information to be put into an electronic mail. The mail creation section 408 creates an electronic mail in which the scene-related information having been subjected to the format conversion is used. The mail communication section 409 transmits the createdmail to the general-user terminal 106.

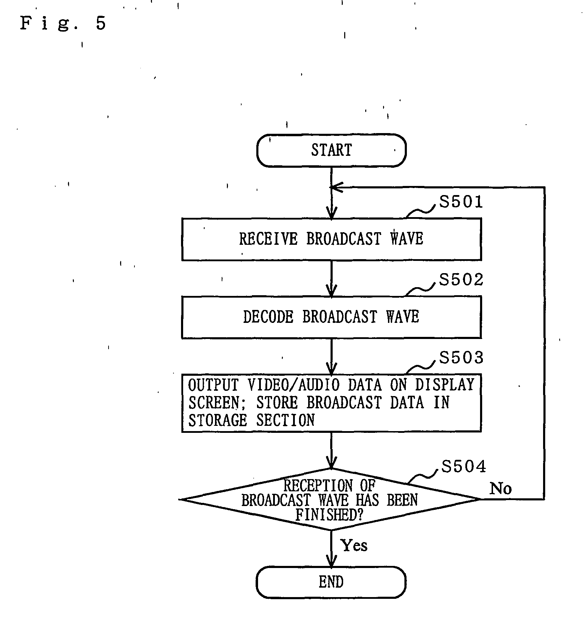

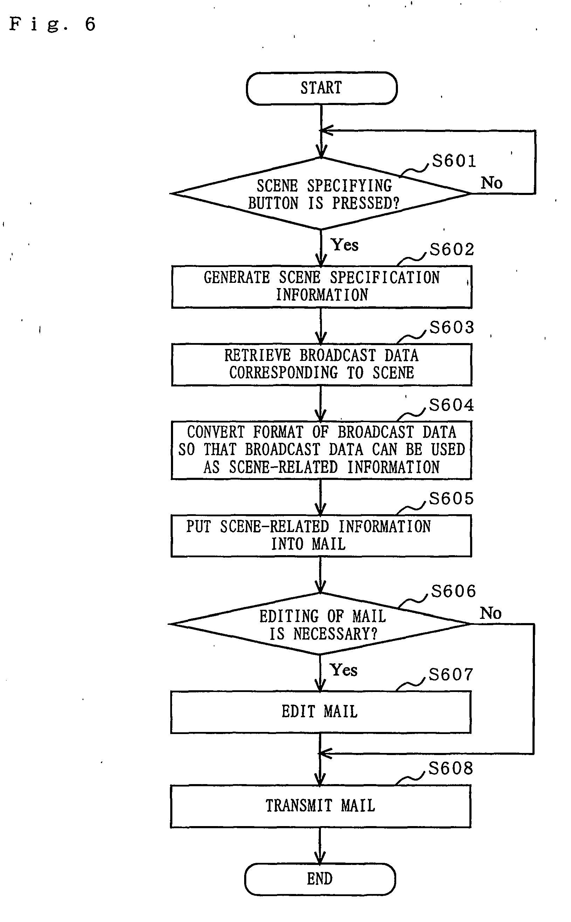

FIG. 5 and FIG. 6 are flowcharts illustrating the process procedure of the mail creation method according to the embodiment of the present invention, employed by the data reception terminal 102 as constructed as described above. FIG. 5 is a flowchart of the processes concerning a broadcast receiving function, and FIG. 6 is a flowchart of the processes concerning an electronic mail transmission function.

With reference to FIG. 5, the processes concerning the broadcast receiving function are described. If the data reception terminal 102 receives a broadcast wave from the broadcasting station 101 (step S501), the data reception terminal 102 performs a decoding process on the broadcast wave (step S502). The data reception terminal 102 outputs the video/audio data separated by the decoding to the display screen 201 or the loudspeaker, and stores the broadcast data separated by the decoding in the related information storage section 404 (step S503). The broadcast data to be stored in the related information storage section 404 is data described in a program description language such as BML or the like. The above processes are performed continuously while broadcast waves are being received (step S504).

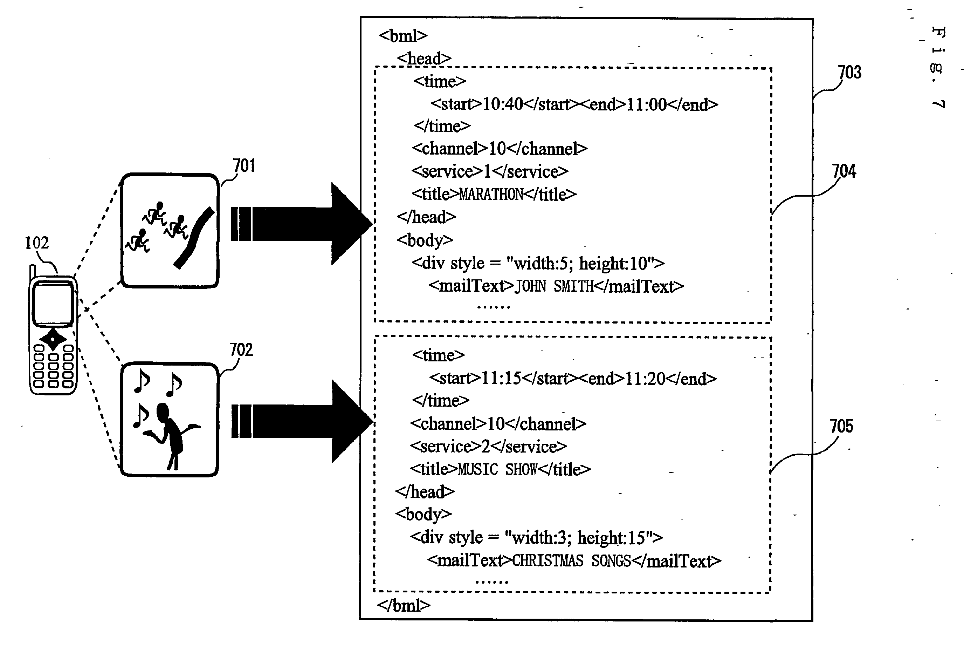

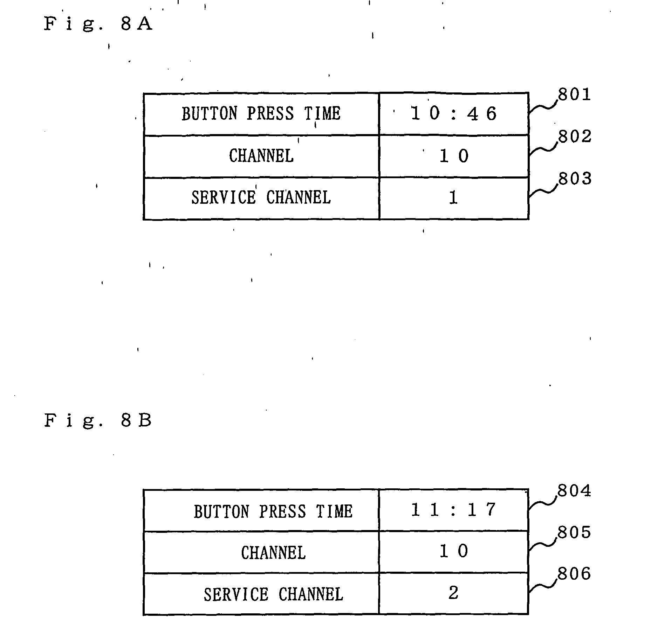

With reference to FIG. 6, the processes concerning the electronic mail transmission function are described. If the user presses the scene specifying button 202 while viewing a TV program (step S601), the data reception terminal 102 generates scene specification information which includes a time, a channel, and/or the like (step S602). For example, in the case where the user viewing a TV program with the data reception terminal 102 attempts to transmit a scene 701 illustrated in FIG. 7 to another user via mail, the scene specification information includes a time 801 at which the scene specifying button 202 is pressed, a viewing channel 802 on which the specified scene is broadcast, and/or the like (FIG. 8A). In the case where the user attempts to transmit a scene 702 illustrated in FIG. 7 to another user via mail, the scene specification information includes a time 804 at which the scene specifying button 202 is pressed, a viewing channel 805 on which the specified scene is broadcast, and/or the like (FIG. 8B). Scene specification information refers to data which is capable of uniquely identifying broadcast data, and may be the contents ID of a TV program or the like.

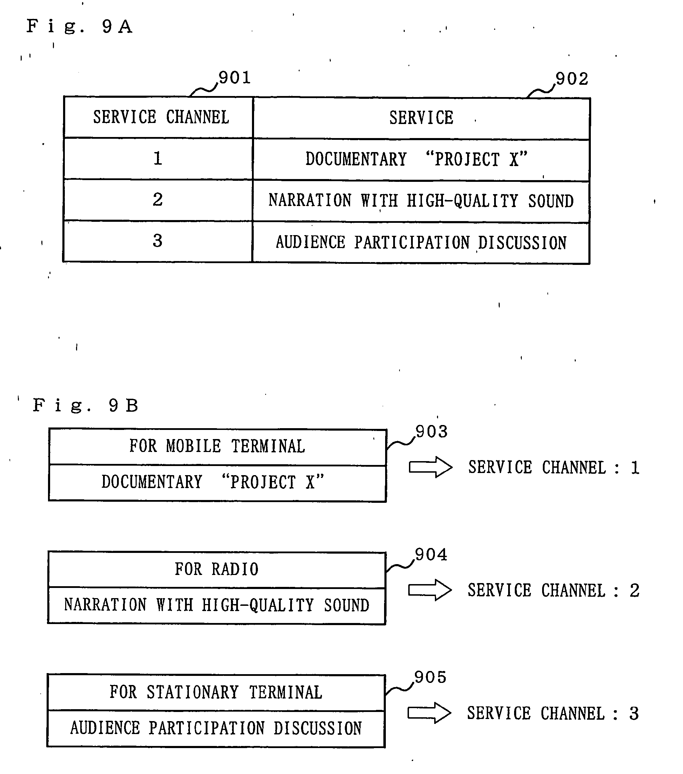

Here, with reference to FIG. 9A and FIG. 9B, a supplementary description is given concerning channels. In Japan, the multiplication of channels can be pointed out as a characteristic feature of digital broadcast, as known in BS digital broadcast. Although only one program can be assigned to one channel in the case of conventional analog broadcast, digital broadcast makes it possible to assign a plurality of programs to one channel. Usually, a plurality of programs included in one channel are distinguished by identifiers called service channels.

Therefore, as shown in FIG. 8A and FIG. 8B, in the case where a plurality of pieces of scene specification information represent the same channel, respective corresponding broadcast data are identified by service channels 803 and 806 along with channels 802 and 805. The service channels are used not only for distinguishing between utterly different programs but may also be used when the user selects a necessary service in the case where a plurality of services 902 are provided by one program, for example (FIG. 9A).

With regard to terrestrial digital broadcasting, in the case of digital broadcast for a radio or a mobile terminal such as a mobile phone and the like, broadcast data is divided into thirteen segments, and at least some of the divided segments combined are put to use (FIG. 9B). For example, the thirteen segments may be allocated among three applications: a mobile terminal, a radio, and a stationary terminal. A mobile terminal on the receiver side may receive one segment of the broadcast data 903 from among the thirteen segments of the broadcast data in order to realize stable reception and/or power saving, and use the service of only viewing of a program titled "Documentary 'Project X' . " Similarly, a radio may use a high-quality sound service in addition to the narration of the documentary, by employing three segments of the broadcast data 904, whereas a stationary terminal may use a service such as audience participation discussion in connection with the documentary, which is realized in the form of chats done with other viewers via the communication network 104.

As described above, in terrestrial digital broadcasting, combining of segments enables the utilization of different services, similarly to the services 902 in BS digital broadcast. Therefore, in the case where a plurality of services are included in one channel as a result of the digitization of broadcast, a method for identifying services, such as service channels, may also be incorporated into the scene specification information according to the present invention.

With reference to FIG. 6 again, if the scene specification information is generated, the data reception terminal 102 retrieves, from the related information storage section 404, the broadcast data (e.g., BML data) of the scene corresponding to the scene specification information, i.e., scene-related information (step S603). For example, the time 801 and channel 802 of the scene specification information is associated with a part of the broadcast data 703 stored in the related information storage section 404, i.e., information 704. Consequently,'the pressing of the scene specifying button 202 enables the acquisition of the information 704. Similarly, the time 804 and channel 805 of the scene specification information is associated with a part of the broadcast data 703, i.e., information 705.

Next, the data reception terminal 102 performs the process of converting the format of the retrieved broadcast data so that the retrieved broadcast data can be used as scene-related information (step S604). The scene-related information refers to text data relating to a scene, and includes, for example, a program title, a person appearing in the program, a description of the scene, information unknown to the user, and/or the like. In other words, this format conversion process corresponds to the process of extracting, from the information in the broadcast data, a text which is capable of being used in the body of an electronic mail. To give a specific explanation with reference to FIG. 7, the scene-related information refers to, within the broadcast data 703, the title of a TV program placed between tags <title> and </title>, the name of a person appearing in or the name of a feature in the program placed between tags <mailText> and </mailText>, and so on. Then, the scene-related information obtained after the format conversion, i . e. , the extracted text, is put into the body of an electronic mail (step S605).

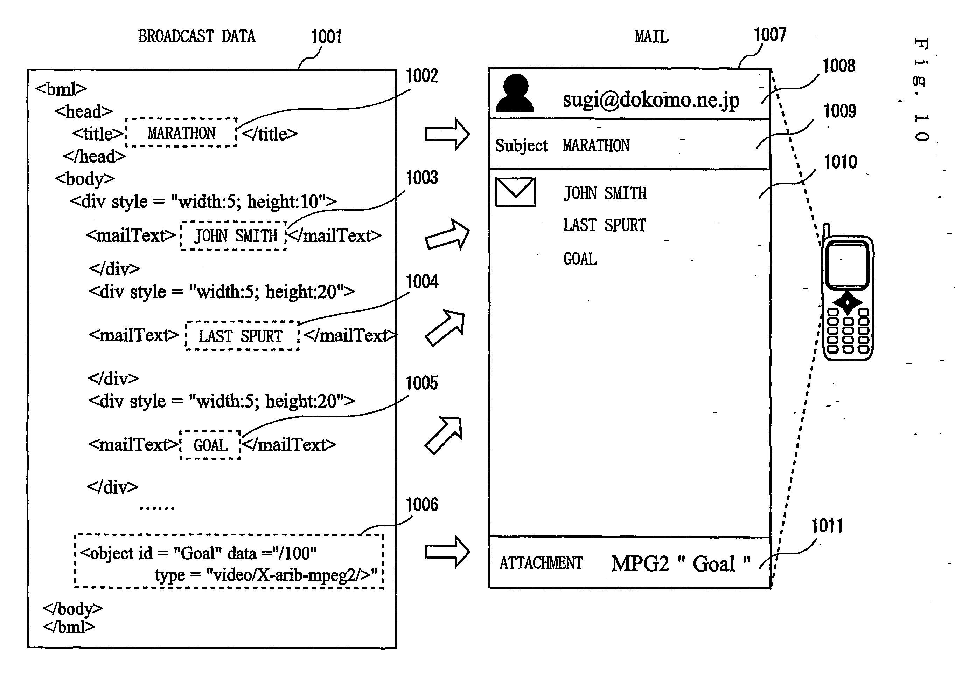

FIG. 10 is a diagram illustrating an exemplary display screen showing scene-related information which is put in the body of an electronic mail. In the case where broadcast data 1001 includes scene-related information 1002 to 1005 and a video file 1006, "MARATHON" (i.e., the scene-related information 1002) placed between tags <title> and </title> within the broadcast data 1001 is put into the subj ect 1009 of an electronic mail 1007. In addition, "JOHN SMITH" (i.e., the scene-related information 1003), "LAST SPURT" (i.e., the scene-related information 1004), and "GOAL" (i.e., the scene-related information 1005) placed between tags <mailText> and </mailText> are put into the body 1010 of the electronic mail. The video file 1006 is attached to the electronic mail as an attached file 1011.

Note that text data extracted as scene-related information by the format conversion does not need to be defined by the tags <title> and </title> or the tags <mailText> and </mailText> as in the above-described example, but may be defined in any other manner. Moreover, there is no limitation as to which scene-related information is to be used in the subject. In the case where there is no scene-related information to be used in the subject, information of an identifier of broadcast data (e.g., the file name of a moving image, audio, a still image, or the like in a relevant scene; a contents ID; or the like) may be used as the subj ect of a mail. Furthermore, in the case of the above-described example, since it is assumed that broadcast data is written in BML, scene-related information is supposed to be text data. However, scene-related information may be binary data or the like as long as it is data usable for mail creation.

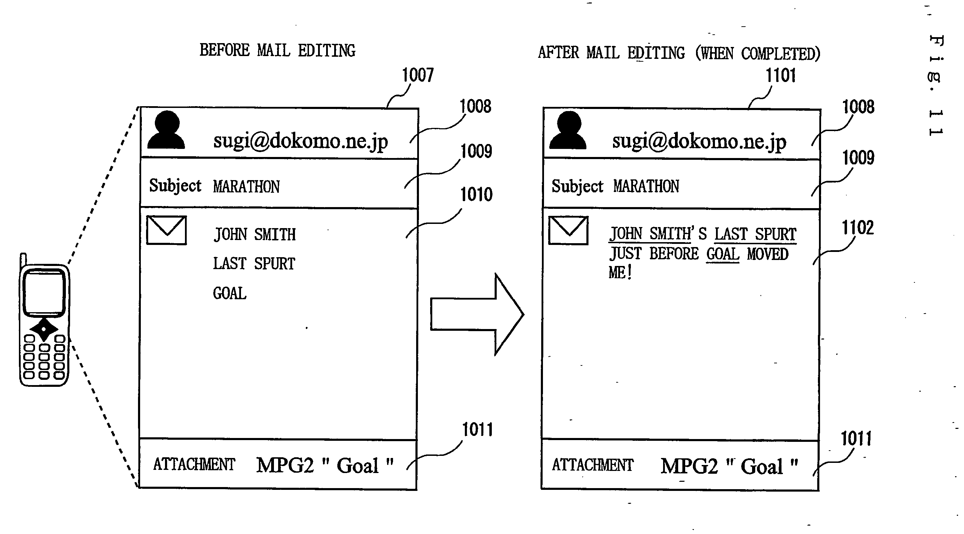

If scene-related information has been put into the body of an electronic mail, the data reception terminal 102 determines whether it is necessary to edit the body of the electronic mail (step S606). The editing here refers to making sentences by adding words such as conj unctions, verbs, and the like to the scene-related information which is merely placed together as shown in FIG. 10, so that a content which the user wants to convey is clearly expressed. In the case of the example of FIG. 11, for example, "'S," "JUST BEFORE, " and "MOVED ME" are added in the body 1010 of the electronic mail, so that a body 1102 is obtained after this editing. In the body 1102 of the electronic mail that is displayed after the user has made the editing, it is preferable that the scene-related information and a part added by the user be distinguished from each other by underlining and/or using different colors of letters, for example.

Depending on the broadcasting station 101, it may so happen that making a change to the scene-related information is undesirable to the broadcasting station 101. Such an example is scene-related information which corresponds to a part related to a person's name, a part in which a copyright message is displayed, or the like. It is desirable that such scene-related information be protected against any editing by the user. This protection may be provided at the broadcasting station 101 side by defining a particular tag, or the data reception terminal 102 side may make a judgment and place a restraint as necessary.

Note that the aforementioned technique of distinguishing user-added parts and the aforementioned technique of protecting certain parts of the scene-related information, which have been described in connection with the body of an electronic mail, may also be applied to the subject part of an electronic mail.

Then, the data reception terminal 102 performs a format conversion and a necessary editing (step S607), and transmits the electronic mail, the editing of which has been completed, to a destination user (step S608) .

As described above, according to a data reception terminal and a mail creation method according to the embodiment of the present invention, text data (i.e., scene-related information) to be used in an electronic mail is extracted from information associated with a specified scene. Consequently, it becomes possible to create an electronic mail easily and accurately. In particular, the body of an electronic mail can be created by only inputting words to be added between text data. Moreover, the operation of inputting the subj ect of an electronic mail by a user can be omitted. Furthermore, it is possible to visually distinguish between scene-related information and a part inputted by a user within the body of an electronic mail.

Note that, among the functional blocks of the data reception terminal according to the present invention, the decoding section 402, the related information retrieval section 405, the format conversion section 407, and the mail creation section 408 are typically realized as an LSI, which is an integrated circuit (which is called an IC, a system LSI, a super LSI, an ultra LSI, or the like depending on the degree of integration)' (see FIG. 4). Each functional block may be separately constructed in a chip form, or all or some of the functional blocks may be constructed in a chip form.

Moreover, the method of circuit integration is not limited to LSI, but may be realized by a dedicated circuit or a general-purpose processor. Furthermore, an FPGA (Field Programmable Gate Array) ; which is an LSI that can be programmed after manufacture, or a reconfigurable processor enabling connections and settings of the circuit cells in the LSI to be reconfigured may be used.

Still further, the advancement of semiconductor technology or another derivative technology may produce a technique for circuit integration that will replace LSI, in which case, as a matter of course, the integration of the functional blocks may be realized by utilizing that technique. A potential example is an application of biotechnology or the like.

In addition, the mail creation method according to the present invention may be realized by a CPU interpreting and executing predetermined program data which is capable of carrying out the above-described process procedure, stored in a storage device (e.g., a ROM, a RAM, a hard disk, or the like). In this case, the program data may be introduced into the storage device via a recording medium such as a CD-ROM, a flexible disk, or the like, or may be executed directly from a recording medium.

### INDUSTRIAL APPLICABILITY

A data reception terminal and a mail creation method of the present invention can be employed when information related to multimedia data is transmitted via an electronic mail, for example, and are particularly useful when it is hoped that the creation of an electronic mail be performed in a short time and with ease, for example.

## Claims

1. A data reception terminal (102) for receiving multiplexed data obtained by multiplexing multimedia data including at least video or audio and scene-related information related to the multimedia data, and creating an electronic mail by utilizing the multiplexed data, comprising:
a receiving section (401) operable to receive the multiplexed data;
a decoding section (402) operable to separate the received multiplexed data into the multimedia data and the scene-related information;
an output section (403) operable to output the separatedmultimedia data;
a storage section (404) operable to store the separated scene-related information;
an input/output acceptance section (406) to, in response to a request from a user, generate scene specification information for identifying a portion of the multimedia data that is being outputted from the output section, the scene specification information including identification information and time;
a retrieval section (405) operable to retrieve, from the storage section, scene-related information corresponding to the scene specification information;
a format conversion section (407) operable to convert the retrieved scene-related information into a format which enables the scene-related information to be used in the electronic mail; and
a mail creation section (408) operable to create a part of data of the electronic mail by utilizing the converted scene-related information.

2. The data reception terminal according to claim 1, wherein
the mail creation section creates a body section of the data of the electronic mail from the scene-related information.

3. The data reception terminal according to claim 1, wherein
the mail creation section sets, as a subj ect of the electronic mail, a part of the scene-related information corresponding to a title.

4. The data reception terminal according to claim 1, wherein
the mail creation section displays, in the electronic mail, data of the electronic mail created from the scene-related information in a form different from that of any other information contained in the electronic mail.

5. The data reception terminal according to claim 1, wherein
data of the electronic mail created from the scene-related information is protected so that a content of the scene-related information is not allowed to be changed.

6. A mail creation method for receiving multiplexed data obtained by multiplexing multimedia data including at least video or audio and scene-related information related to the multimedia data, and creating an electronic mail by utilizing the multiplexed data, comprising:
a step of receiving the multiplexed (S501) data;
a step of separating the received multiplexed data into the multimedia data and the scene-related information (S0503) ;
a step of outputting the separated multimedia data via an output section (S503);
a step of storing the separated scene-related information in a storage section (S503);
a step of, in response to a request from a user (S601), generating scene specification information for identifying a portion of the multimedia data that is being outputted from the output section (S602) the scene specification information including identification information and time;
a step of retrieving, from the storage section, scene-related information corresponding to the scene specification information (S603);
a step of converting the retrieved scene-related information into a format which enables the scene-related information to be used in the electronic mail (S604); and
a step of creating a part of data of the electronic mail by utilizing the converted scene-related information (S605).

7. A computer-readable program for causing a data reception terminal to execute a mail creation method for receiving multiplexed data obtained by multiplexing multimedia data including at least video or audio and scene-related information related to the multimedia data, and creating an electronic mail by utilizing the multiplexed data, wherein
the program causes the data reception terminal to execute:
a step of receiving the multiplexed data (S501);
a step of separating the received multiplexed data into the multimedia data and the scene-related information (S503);
a step of outputting the separated multimedia data via an output section (S503);
a step of storing the separated scene-related information in a storage section (S503);
a step of, in response to a request from a user (S601) generating scene specification information for identifying a portion of the multimedia data that is being outputted from the output section (S602), the scene specification information including identification information and time;
a step of retrieving, from the storage section, scene-related information corresponding to the scene specification information (S603);
a step of converting the retrieved scene-related information into a format which enables the scene-related information to be used in the electronic mail (S604); and
a step of creating a part of data of the electronic mail by utilizing the converted scene-related information (S605).

8. A medium having recorded therein a computer-readable program for causing a data reception terminal to execute a mail creation method for receiving multiplexed data obtained by multiplexing multimedia data including at least video or audio and scene-related information related to the multimedia data, and creating an electronic mail by utilizing the multiplexed data, wherein
the program causes the data reception terminal to execute:
a step of receiving the multiplexed data (S501);
a step of separating the received multiplexed data into the multimedia data and the scene-related information (S503);
a step of outputting the separated multimedia data via an output section (S503);
a step of storing the separated scene-related information in a storage section (S503);
a step of, in response to a request from a user (S601), generating scene specification information for identifying a portion of the multimedia data that is being outputted from the output section (S602), the scene specification information including identification information and time;
a step of retrieving, from the storage section, scene-related information, corresponding to the scene specification information (S603);
a step of converting the retrieved scene-related information into a format which enables the scene-related information to be used in the electronic mail (S604); and
a step of creating a part of data of the electronic mail by utilizing the converted scene-related information (S605).

9. An integrated circuit for use in a data reception terminal for receiving multiplexed data obtained by multiplexing multimedia data including at least video or audio and scene-related information related to the multimedia data, and creating an electronic mail by utilizing the multiplexed data, wherein,
the data reception terminal includes: a receiving section (401) operable to receive the multiplexed data; an output section (403) operable to output the multimedia data; a storage section (404) operable to store the scene-related information; and an input/output acceptance section (406) operable to, in response to a request from a user, generate scene specification information for identifying a portion of the multimedia data that is being outputted from the output section, the scene specification information including identification information and time, and
the integrated circuit integrates circuitry, functioning as:
a decoding section (402) operable to separate the received multiplexed data into the multimedia data and the scene-related information;
a retrieval section (405) operable to retrieve, from the storage section, scene-related information corresponding to the scene specification information;
a format conversion section (407) operable to convert the retrieved scene-related information into a format which enables the scene-related information to be used in the electronic mail; and
a mail creation section (408) operable to create a part of data of the electronic mail by utilizing the converted scene-related information.

## Patentansprüche

1. Datenempfangsgerät (102) zum Empfangen gemultiplexter Daten, die durch Multiplexen von Multimediadaten erlangt werden, die zumindest Bild oder Ton und auf die Multimediadaten bezogene szenenbezogene Informationen einschließen, und zum Erzeugen eines elektronischen Briefs durch Verwendung der multiplexten Daten, umfassend:
einen Empfangsteil (401), einsetzbar, um die gemultiplexten Daten zu empfangen,
einen Entschlüsselungsteil (402), einsetzbar, um die empfangenen gemultiplexten Daten in die Multimediadaten und die szenenbezogenen Informationen zu trennen,
einen Ausgabeteil (403), einsetzbar, um die getrennten Multimediadaten auszugeben,
einen Speicherteil (404), einsetzbar, um die getrennten szenenbezogenen Informationen zu speichern,
einen Eingabe-/Ausgabeannahmeteil (406), einsetzbar, um als Reaktion auf eine Anfrage eines Benutzers Szenenbestimmungsinformationen zu erzeugen, um einen Teil der Multimediadaten, die durch den Ausgabeteil ausgegeben werden, zu bezeichnen, wobei die Szenenbestimmungsinformationen Identifikationsinformationen und Zeit umfassen,
einen Abfrageteil (405), einsetzbar, um aus dem Speicherteil die den Szenenbestimmungsinformationen entsprechenden szenenbezogenen Informationen abzufragen,
einen Formatumwandlungsteil (407), einsetzbar, um die abgefragten szenenbezogenen Informationen in ein Format umzuwandeln, das es ermöglicht, die szenenbezogenen Informationen in dem elektronischen Brief zu verwenden, und
einen Brieferzeugungsteil (408), einsetzbar, um durch Verwendung der umgewandelten szenenbezogenen Informationen einen Teil der Daten des elektronischen Briefs zu erzeugen.

2. Das Datenempfangsgerät nach Anspruch 1, wobei
der Brieferzeugungsteil aus den szenenbezogenen Informationen einen Inhaltsteil der Daten des elektronischen Briefs erzeugt.

3. Das Datenempfangsgerät nach Anspruch 1, wobei
der Brieferzeugungsteil einen Teil der szenenbezogenen Informationen, der einem Titel entspricht, als ein Betreff des elektronischen Briefs setzt.

4. Das Datenempfangsgerät nach Anspruch 1, wobei
der Brieferzeugungsteil in dem elektronischen Brief aus den szenenbezogenen Informationen erzeugte Daten des elektronischen Briefs abspielt, deren Form sich von der Form aller übrigen in dem elektronischen Brief enthaltenen Informationen unterscheidet.

5. Das Datenempfangsgerät nach Anspruch 1, wobei
aus den szenenbezogenen Informationen erzeugte Daten des elektronischen Briefs so geschützt werden, dass sich ein Inhalt der szenenbezogenen Informationen nicht ändern darf.

6. Brieferzeugungsverfahren zum Empfangen gemultiplexter Daten, die durch Multiplexen von Multimediadaten erlangt werden, die zumindest Bild oder Ton und auf die Multimediadaten bezogene szenenbezogene Informationen einschließen, und zum Erzeugen eines elektronischen Briefs durch Verwendung der gemultiplexten Daten, umfassend:
einen Schritt des Empfangens der gemultiplexten Daten (S501),
einen Schritt des Trennens der empfangenen gemultiplexten Daten in die Multimediadaten und die szenenbezogene Informationen (S0503),
einen Schritt des Ausgebens der getrennten Multimediadaten über einen Ausgabeteil (S503),
einen Schritt des Speicherns der getrennten szenenbezogene Informationen in einem Speicherteil (S503),
einen Schritt, als Reaktion auf die Anfrage eines Benutzers (S601), des Erzeugens von Szenenbestimmungsinformationen zum Bezeichnen eines Teils der Multimediadaten, die aus dem Ausgabeteil (S602) ausgegeben werden, wobei die Szenenbestimmungsinformationen Identifikationsinformationen und Zeit einschließen,
einen Schritt des Abfragens der den Szenenbestimmungsinformationen (S603) entsprechenden szenenbezogenen Informationen aus dem Speicherteil,
einen Schritt des Umwandelns der abgerufenen szenenbezogenen Informationen in ein Format, das es ermöglicht, die szenenbezogenen Informationen in dem elektronischen Brief (S604) zu verwenden, und
einen Schritt des Erzeugens eines Teils der Daten des elektronischen Briefs durch Verwendung der umgewandelten szenenbezogenen Informationen (S605).

7. Rechnerlesbares Programm, um ein Datenempfangsgerät zu veranlassen, ein Brieferzeugungsverfahren zum Empfangen gemultiplexter Daten auszuführen, die durch Multiplexen von Multimediadaten erlangt werden, die zumindest Bild oder Ton und auf die Multimediadaten bezogene szenenbezogene Informationen einschließen, und einen elektronischen Brief durch Verwendung der gemultiplexten Daten zu erzeugen, wobei
das Programm das Datenempfangsgerät veranlasst auszuführen:
einen Schritt des Empfangens der gemultiplexten Daten (S501),
einen Schritt des Trennens der empfangenen gemultiplexten Daten in die Multimediadaten und die szenenbezogene Informationen (S0503),
einen Schritt des Ausgebens der getrennten Multimediadaten über einen Ausgabeteil (S503),
einen Schritt des Speicherns der getrennten szenenbezogene Informationen in einem Speicherteil (S503),
einen Schritt des Erzeugens von Szenenbestimmungsinformationen als Reaktion auf die Anfrage eines Benutzers zum Bezeichnen eines Teils der Multimediadaten, die aus dem Ausgabeteil (S602) ausgegeben werden, wobei die Szenenbestimmungsinformationen Identifikationsinformationen und Zeit einschließen,
einen Schritt des Abfragens von den Szenenbestimmungsinformationen (S603) entsprechenden szenenbezogenen Informationen aus dem Speicherteil,
einen Schritt des Umwandelns der abgerufenen szenenbezogenen Informationen in ein Format, das es ermöglicht, die szenenbezogenen Informationen in dem elektronischen Brief (S604) zu verwenden, und
einen Schritt des Erzeugens eines Teils der Daten des elektronischen Briefs durch Verwendung der umgewandelten szenenbezogenen Informationen (S605).

8. Medium, auf dem ein rechnerlesbares Programm aufgezeichnet ist, um ein Datenempfangsgerät zu veranlassen, ein Brieferzeugungsverfahren auszuführen, um gemultiplexte Daten zu empfangen, die durch Multiplexen von Multimediadaten erlangt werden, die zumindest Bild oder Ton und auf die Multimediadaten bezogene szenenbezogene Informationen einschließen, und einen elektronischen Brief durch Verwendung der gemultiplexten Daten zu erzeugen, wobei
das Programm das Datenempfangsgerät veranlasst auszuführen:
einen Schritt des Empfangens der gemultiplexten Daten (S501),
einen Schritt des Trennens der empfangenen gemultiplexten Daten in die Multimediadaten und die szenenbezogene Informationen (S0503),
einen Schritt des Ausgebens der getrennten Multimediadaten über einen Ausgabeteil (S503),
einen Schritt des Speicherns der getrennten szenenbezogenen Informationen in einem Speicherteil (S503),
einen Schritt des Erzeugens von Szenenbestimmungsinformationen als Reaktion auf die Anfrage eines Benutzers zum Bezeichnen eines Teils der Multimediadaten, die aus dem Ausgabeteil ausgegeben werden (S602), wobei die Szenenbestimmungsinformationen Identifikationsinformationen und Zeit einschließen,
einen Schritt des Abfragens von den Szenenbestimmungsinformationen (S603) entsprechenden szenenbezogenen Informationen aus dem Speicherteil,
einen Schritt des Umwandelns der abgerufenen szenenbezogenen Informationen in ein Format, das es ermöglicht, die szenenbezogenen Informationen in dem elektronischen Brief (S604) zu verwenden, und
einen Schritt des Erzeugens eines Teils der Daten des elektronischen Briefs durch Verwendung der umgewandelten szenenbezogenen Informationen (S605).

9. Integrierter Schaltkreis zur Verwendung in einem Datenempfangsgerät zum Empfangen gemultiplexter Daten, die durch Multiplexen von Multimediadaten erlangt werden, die zumindest Bild oder Ton und auf die Multimediadaten bezogene szenenbezogene Informationen umfassen, und zum Erzeugen eines elektronischen Briefs durch Verwendung der gemultiplexten Daten, wobei
das Datenempfangsgerät umfasst: einen Empfangsteil (401), einsetzbar, um die gemultiplexten Daten zu empfangen, einen Ausgabeteil (403), einsetzbar, um die Multimediadaten auszugeben, einen Speicherteil (404), einsetzbar, um die szenenbezogenen Informationen zu speichern, einen Eingabe-/Ausgabeannahmeteil (406), einsetzbar, um als Reaktion auf ein Anfrage eines Benutzers Szenenbestimmungsinformationen zu erzeugen, um einen Teil der Multimediadaten, die durch den Ausgabeteil ausgegeben werden, zu bezeichnen, wobei die Szenenbestimmungsinformationen Identifikationsinformationen und Zeit einschließen, und wobei der integrierte Schaltkreis Schaltungen umfasst, die fungieren als:
ein Entschlüsselungsteil (402), einsetzbar, um die empfangenen gemultiplexten Daten in die Multimediadaten und die szenenbezogenen Informationen zu trennen,
ein Abfrageteil (405), einsetzbar, um aus dem Speicherteil szenenbezogene Informationen, die den Szenenbestimmungsinformationen entsprechen, abzufragen,
einen Formatumwandlungsteil (407), einsetzbar, um die abgefragten szenenbezogenen Informationen in ein Format umzuwandeln, das es ermöglicht, die szenenbezogenen Informationen in dem elektronischen Brief zu verwenden, und
ein Brieferzeugungsteil (408), einsetzbar, um durch Verwendung der umgewandelten szenenbezogenen Informationen einen Teil der Daten des elektronischen Briefs zu erzeugen.

## Revendications

1. Terminal (102) de réception de données pour recevoir des données multiplexées obtenues par multiplexage de données multimédia comprenant au moins des informations vidéo ou audio et des informations liées à une scène concernant les données multimédia, et pour créer un courrier électronique en utilisant les données multiplexées, comprenant :
une section (401) de réception pouvant être actionnée pour recevoir les données multiplexées ;
une section (402) de décodage pouvant être actionnée pour séparer les données multiplexées reçues dans les données multimédia et les informations liées à une scène ;
une section (403) d'envoi pouvant être actionnée pour envoyer les données multimédia séparées ;
une section (404) de stockage pouvant être actionnée pour stocker les informations séparées liées à une scène ;
une section (406) d'acceptation de réception/d'envoi pouvant être actionnée, en réponse à une demande provenant d'un utilisateur, pour générer des informations de spécification de scène pour identifier une partie des données multimédia qui est envoyée de la section d'envoi, les informations de spécification de scène comprenant des informations d'identification et la durée ;
une section (405) d'extraction pouvant être actionnée pour extraire, à partir de la section de stockage, des informations liées à une scène correspondant aux informations de spécification de scène ;
une section (407) de conversion de format pouvant être actionnée pour convertir les informations extraites liées à une scène dans un format qui permet aux informations liées à une scène d'être utilisées dans le courrier électronique ; et
une section (408) de création de courrier pouvant être actionnée pour créer une partie des données du courrier électronique en utilisant les informations converties liées à une scène.

2. Terminal de réception de données selon la revendication 1, dans lequel
la section de création de courrier crée une section de corps des données du courrier électronique à partir des informations liées à une scène.

3. Terminal de réception de données selon la revendication 1, dans lequel
la section de création de courrier établit, en tant que sujet du courrier électronique, une partie des informations liées à une scène correspondant à un titre.

4. Terminal de réception de données selon la revendication 1, dans lequel
la section de création de courrier affiche, dans le courrier électronique, des données du courrier électronique créées à partir des informations liées à une scène d'une forme différente de celle de toute autre information contenue dans le courrier électronique.

5. Terminal de réception de données selon la revendication 1, dans lequel
des données du courrier électronique créées à partir des informations liées à une scène sont protégées afin qu'un contenu des informations liées à une scène ne soit pas autorisé à être changé.

6. Procédé de création de courrier pour recevoir des données multiplexées obtenues par multiplexage des données multimédia comprenant au moins des informations vidéo ou audio et des informations liées à une scène concernant les données multimédia, et pour créer un courrier électronique en utilisant les données multiplexées, comprenant :
une étape consistant à recevoir les données multiplexées (S501) ;
une étape consistant à séparer les données multiplexées reçues en données multimédia et informations (S0503) liées à une scène ;
une étape consistant à envoyer les données multimédia séparées via une section (S503) d'envoi ;
une étape consistant à stocker les informations séparées liées à une scène dans une section (S503) de stockage ;
une étape, en réponse à une demande provenant d'un utilisateur (S601), consistant à générer des informations de spécification de scène pour identifier une partie des données multimédia qui est envoyée à partir de la section (S602) d'envoi, les informations de spécification de scène comprenant des informations d'identification et la durée ;
une étape consistant à extraire, à partir de la section de stockage, des informations liées à une scène correspondant aux informations (S603) de spécification de scène ;
une étape consistant à convertir les informations extraites liées à une scène dans un format qui permet aux informations liées à une scène d'être utilisées dans le courrier électronique (S604) ; et
une étape consistant à créer une partie des données du courrier électronique en utilisant les informations (S605) converties liées à une scène.

7. Programme lisible par ordinateur pour entraîner un terminal de réception de données à réaliser un procédé de création de courrier pour recevoir des données multiplexées obtenues par multiplexage de données multimédia comprenant au moins des informations vidéo ou audio et des informations liées à une scène concernant les données multimédia, et pour créer un courrier électronique en utilisant les données multiplexées, dans lequel
le programme entraîne le terminal de réception de données à réaliser :
une étape consistant à recevoir les données multiplexées (S501)
une étape consistant à séparer les données multiplexées reçues dans les données multimédia et les informations (S503) liées à une scène
une étape consistant à envoyer les données multimédia séparées via une section (S503) d'envoi
une étape consistant à stocker les informations liées à une scène séparées dans une section (S503) de stockage
une étape, en réponse à une demande provenant d'un utilisateur (S601), consistant à générer des informations de spécification de scène pour identifier une partie des données multimédia qui est envoyée à partir de la section (S602) d'envoi, les informations de spécification de scène comprenant des informations d'identification et la durée ;
une étape consistant à extraire, à partir de la section de stockage, des informations liées à une scène correspondant aux informations (S603) de spécification de scène ;
une étape consistant à convertir les informations extraites liées à une scène dans un format qui permet aux informations liées à une scène d'être utilisées dans le courrier électronique (S604) ; et
une étape consistant à créer une partie des données du courrier électronique en utilisant les informations (S605) converties liées à une scène.

8. Support ayant enregistré dans celui-ci un programme lisible par ordinateur pour entraîner un terminal de réception de données à réaliser un procédé de création de courrier pour recevoir des données multiplexées obtenues par multiplexage des données multimédia comprenant au moins des informations vidéo ou audio et des informations liées à une scène concernant les données multimédia, et pour créer un courrier électronique en utilisant les données multiplexées, dans lequel
le programme entraîne le terminal de réception de données à réaliser :
une étape consistant à recevoir les données (S501) multiplexées
une étape consistant à séparer les données multiplexées reçues dans les données multimédia et les informations (S503) liées à une scène
une étape consistant à envoyer les données multimédia séparées via une section (S503) d'envoi ;
une étape consistant à stocker les informations séparées liées à une scène dans une section (S503) de stockage ;
une étape, en réponse à une demande provenant d'un utilisateur (S601), consistant à générer des informations de spécification de scène pour identifier une partie des données multimédia qui est envoyée à partir de la section (S602) d'envoi, les informations de spécification de scène comprenant des informations d'identification et la durée ;
une étape consistant à extraire, à partir de la section de stockage, des informations liées à une scène correspondant aux informations (S603) de spécification de scène ;
une étape consistant à convertir les informations extraites liées à une scène dans un format qui permet aux informations liées à une scène d'être utilisées dans le courrier électronique (S604) ; et
une étape consistant à créer une partie des données du courrier électronique en utilisant les informations (S605) converties liées à une scène.

9. Circuit intégré pour utilisation dans un terminal de réception de données pour recevoir des données multiplexées obtenues par multiplexage des données multimédia comprenant au moins des informations vidéo ou audio et des informations liées à une scène concernant les données multimédia, et pour créer un courrier électronique en utilisant les données multiplexées, dans lequel,
le terminal de réception de données comprend : une section (401) de réception pouvant être actionnée pour recevoir les données multiplexées ; une section (403) d'envoi pouvant être actionnée pour envoyer les données multimédia ; une section (404) de stockage pouvant être actionnée pour stocker les informations liées à une scène ; et une section (406) d'acceptation de réception/d'envoi pouvant être actionnée, en réponse à une demande provenant d'un utilisateur, pour générer des informations de spécification de scène pour identifier une partie des données multimédia qui est envoyée à partir de la section d'envoi, les informations de spécification de scène comprenant des informations d'identification et la durée, et
le circuit intégré intègre l'ensemble des circuits, fonctionnant comme :
une section (402) de décodage pouvant être actionnée pour séparer les données multiplexées reçues dans les données multimédia et les informations liées à une scène ;
une section (405) d'extraction pouvant être actionnée pour extraire, de la section de stockage, des informations liées à une scène correspondant aux informations de spécification de la scène ;
une section (407) de conversion de format pouvant être actionnée pour convertir les informations d'extraction liées à une scène dans un format qui permet aux informations liées à une scène d'être utilisées dans le courrier électronique ; et
une section (408) de création pouvant être actionnée pour créer une partie de données du courrier électronique en utilisant les informations converties liées à une scène.
